# EUROPEAN PATENT APPLICATION

(11) **EP 4 797 675 A1**
(43) Date of publication of application: **26.08.2026**
(21) Application number: 24879108.9
(22) Date of filing: 18.10.2024
(51) Int. Cl.: H04N 5/262

(54) **SPECIAL EFFECT GENERATION METHOD AND APPARATUS, ELECTRONIC DEVICE, AND STORAGE MEDIUM**

(30) Priority: 20.10.2023 CN 202311363139
(71) Applicant: Beijing Zitiao Network Technology Co., Ltd., Beijing 100190 (CN)
(72) Inventor: HUANG, Qinggai, Beijing 100028 (CN); LI, Shaoling, Beijing 100028 (CN); YIN, Hao, Beijing 100028 (CN); SHEN, Yanhao, Beijing 100028 (CN); HU, Kai, Beijing 100028 (CN)
(74) Representative: Marks & Clerk LLP
(86) International application number: PCT/CN2024/125707
(87) International publication number: WO 2025/082468

(57) **Abstract**

Provided in the embodiments of the present disclosure are a special effect generation method and apparatus, an electronic device, and a storage medium. The special effect generation method comprises: receiving requirement information input by a user, the requirement information being used for describing, on the basis of a natural language, a requirement for generating a target special effect; according to the requirement information, generating a special effect natural matched with image content of the currently displayed target image; and, on the basis of the special effect material, generating a target special effect in the target image. By converting in real time the requirement for generating a target special effect input by the user into the special effect material matched with the image content of the target image, and then generating the target special effect on the basis of the special effect material, the present disclosure generates individual special effects in real time, and thus expands the content forms of the special effects, such that the special effects are matched with image content, improving application effects in images.

## Description

The present application claims priority to Chinese Patent Application No. 202311363139.8, filed on October 20, 2023, which is incorporated herein by reference in its entirety as a part of the present application.

### TECHNICAL FIELD

Embodiments of the present disclosure relate to an effect generation method and apparatus, an electronic device, and a storage medium.

### BACKGROUND

At present, in an application scenario of media content creation, a user can add effects to an image or a video through effect props provided within a platform or an application, thereby imparting a better visual effect to the image or video.

In the conventional art, the effect props provided in the platform or application are usually preinstalled therein, and have problems such as fixed styles and limited types, which affect the application effects of the effects in the image or video.

### SUMMARY

Embodiments of the present disclosure provide an effect generation method and apparatus, an electronic device, and a storage medium.

According to a first aspect, an embodiment of the present disclosure provides an effect generation method. The method includes:
receiving requirement information input by a user, where the requirement information is configured to describe a generation requirement for a target effect in a natural language; generating, based on the requirement information, an effect material that matches image content of a currently displayed target image; and generating the target effect in the target image based on the effect material.

According to a second aspect, an embodiment of the present disclosure provides an effect generation apparatus. The apparatus includes:
an interaction module configured to receive requirement information input by a user, where the requirement information is configured to describe a generation requirement for a target effect in natural language;
a generation module configured to generate, based on the requirement information, an effect material that matches image content of a currently displayed target image; and
a rendering module configured to generate the target effect in the target image based on the effect material.

According to a third aspect, an embodiment of the present disclosure provides an electronic device. The electronic device includes: a processor and a memory.

The memory has computer-executable instructions stored thereon.

The processor executes the computer-executable instructions stored in the memory, to cause the at least one processor to perform the effect generation method according to the first aspect and various possible designs of the first aspect.

According to a fourth aspect, an embodiment of the present disclosure provides a computer-readable storage medium storing computer-executable instructions that, when executed by a processor, cause the effect generation method according to the first aspect and various possible designs of the first aspect to be implemented.

According to a fifth aspect, an embodiment of the present disclosure provides a computer program product including a computer program that, when executed by a processor, causes the effect generation method according to the first aspect and various possible designs of the first aspect to be implemented.

### BRIEF DESCRIPTION OF DRAWINGS

In order to describe the technical solutions in embodiments of the present disclosure or in the conventional art more clearly, the accompanying drawings for describing the embodiments or the conventional art are briefly described below. Apparently, the accompanying drawings in the following description are some embodiments of the present disclosure, and those of ordinary skill in the art may still derive other accompanying drawings from these accompanying drawings without creative efforts.
FIG. 1 is a diagram of an application scenario of an effect generation method according to an embodiment of the present disclosure;
FIG. 2 is a first schematic flowchart of an effect generation method according to an embodiment of the present disclosure;
FIG. 3 is a schematic diagram of an interaction in which a user inputs requirement information according to an embodiment of the present disclosure;
FIG. 4 is a flowchart of a specific implementation of step S102 in the embodiment shown in FIG. 2;
FIG. 5 is a schematic diagram of a process of determining a target effect material according to an embodiment of the present disclosure;
FIG. 6 is a flowchart of a specific implementation of step S103 in the embodiment shown in FIG. 2;
FIG. 7 is a second schematic flowchart of an effect generation method according to an embodiment of the present disclosure;
FIG. 8 is a flowchart of a specific implementation of step S202 in the embodiment shown in FIG. 7;
FIG. 9 is a flowchart of a specific implementation of step S2022 in the embodiment shown in FIG. 8;
FIG. 10 is a schematic diagram of a process of generating a second prompt according to an embodiment of the present disclosure;
FIG. 11 is a flowchart of a specific implementation of step S205 in the embodiment shown in FIG. 7;
FIG. 12 is a structural block diagram of an effect generation apparatus according to an embodiment of the present disclosure;
FIG. 13 is a schematic structural diagram of an electronic device according to an embodiment of the present disclosure; and
FIG. 14 is a schematic diagram of a hardware structure of an electronic device according to an embodiment of the present disclosure.

### DETAILED DESCRIPTION

In order to make the objectives, technical solutions, and advantages of embodiments of the present disclosure clearer, the technical solutions in the embodiments of the present disclosure are described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

It should be noted that user information (including but not limited to device information, personal information, and the like of a user) and data (including but not limited to data for analysis, stored data, displayed data, and the like) involved in the present disclosure are information and data for which an authorization is obtained from the user or a full authorization is obtained from each party, and the collection, use, and processing of relevant data need to comply with relevant laws, regulations, and standards of relevant countries and regions, for which corresponding operation entries are provided for the user to choose to authorize or deny.

An application scenario of the embodiments of the present disclosure is explained below.

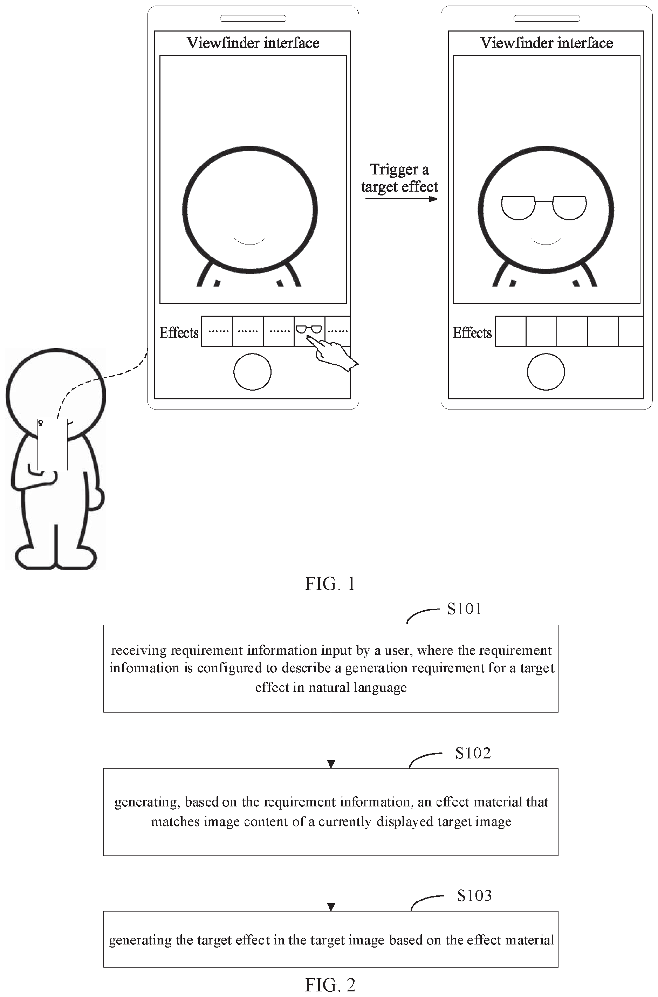

FIG. 1 is a diagram of an application scenario of an effect generation method according to an embodiment of the present disclosure. The effect generation method according to this embodiment of the present disclosure may be applied to an application having an effect editing function, and more specifically, to an application scenario where a video or photo with video effects is shot. An execution entity of this embodiment may be a terminal device that runs the application having an effect editing function, may be a server at a corresponding serving end at which the application is deployed, or may be other electronic devices that have a similar function. Referring to FIG. 1, a terminal device is taken as an example, where the terminal device is, for example, a smartphone. The terminal device photographs a user through a camera unit and displays a real-time image of the photographed user in a viewfinder interface. Thereafter, in response to a user operation, a target effect, such as virtual "glasses" shown in the figure, is triggered in the viewfinder interface, thus displaying the target effect in the real-time image. Then, the terminal device may take a picture or record a video based on the target effect, thus generating an effect video or an effect picture with the above-mentioned target effect.

Certainly, the method provided in this embodiment may also be applied to a scenario where a non-real-time image is edited. For example, a captured picture or video may be loaded to the terminal device, and a video effect may be added to the captured picture or video using effect props provided in the application.

In the conventional art, the above-mentioned process of adding, by using a user operation, a target effect to a real-time image or non-real-time image is generally implemented by using effect props provided within the platform or application. The user may select one or more of the effect props provided in the platform or application to add effects. However, in one aspect, the process of manually selecting effect props by the user is time-consuming and inefficient, affecting the overall efficiency of effect editing. In another aspect, the effect props have limited styles and types since they are pre-generated, and as a result, the user often cannot obtain a target effect that matches the video content or that the user is interested in, thus affecting application effects of the effect in the image. In addition, the above-mentioned two problems condition each other. A small number of preset effects and a small number of styles of preset effects will affect application effects of an effect in an image, while only an increase of the number of preset effects will enhance the difficulty of user retrieval and affect the efficiency.

An embodiment of the present disclosure provides an effect generation method to solve the above-mentioned problems.

Embodiments provide an effect generation method and apparatus, an electronic device, and a storage medium. The method includes: receiving requirement information input by a user, where the requirement information is configured to describe a generation requirement for a target effect in natural language; generating, based on the requirement information, an effect material that matches image content of a currently displayed target image; and generating the target effect in the target image based on the effect material. The generation requirement for the target effect that is input by the user is converted in real time into the effect material that matches the image content of the target image, and then the target effect is generated based on the effect material, so that a personalized effect can be generated in real time, thereby expanding the content form of the effect, matching the effect with the image content, and improving the application effects in the image.

Referring to FIG. 2, FIG. 2 is a first schematic flowchart of an effect generation method according to an embodiment of the present disclosure. The method of this embodiment may be applied to a terminal device. The effect generation method includes the following steps.

Step S101: receiving requirement information input by a user, where the requirement information is configured to describe a generation requirement for a target effect in natural language.

For example, referring to the schematic diagram of an application scenario shown in FIG. 1, the target effect needs to be determined by using a user operation before the terminal device triggers the target effect. In a possible implementation, the terminal device displays, in a first interface, an input control for inputting information, for example, an editable text box or a voice input button, and the user inputs characters or voice to the terminal device through the input control, so that the terminal device may obtain the requirement information. The requirement information is configured to describe the generation requirement for the target effect in natural language. For example, the requirement information may be a segment of text, and the corresponding text content thereof is "Create a science fiction-style background effect for me".

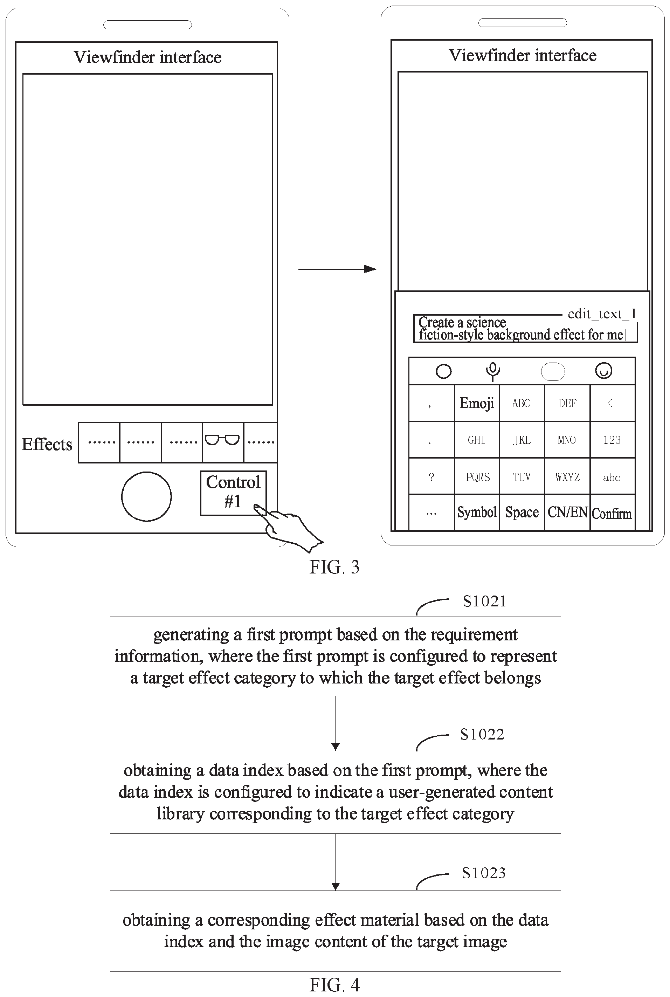

FIG. 3 is a schematic diagram of an interaction in which a user inputs requirement information according to an embodiment of the present disclosure. The above-mentioned step S101 is described below with reference to FIG. 3. As shown in FIG. 3, after the terminal device starts a target application, a viewfinder interface for shooting a video is invoked, and a control #1 for adding an effect is provided in the viewfinder interface. In response to a click operation of the user on the control #1, the first interface is displayed in the viewfinder interface, where the first interface includes an editable text box edit_text_1 (shown as edit_text_1 in the figure). Then, the user inputs a text into the editable text box, for example, "Create a science fiction-style background effect for me". The terminal device performs semantic analysis on the above-mentioned input text to generate requirement information; or the input text is directly used as requirement information for the execution of subsequent steps.

Step S102: generating, based on the requirement information, an effect material that matches image content of a currently displayed target image.

For example, first, the currently displayed target image is an image currently displayed within an interaction interface of the terminal device, that is, an image into which the target effect is to be inserted currently. Specifically, the currently displayed target image may be, for example, an image captured in real time by a camera unit and displayed in a camera viewfinder, or a pre-generated picture or an image in a video that is currently loaded, for example, the target image is a video frame in a pre-loaded video. More specifically, the target image may be a cover image of a video, or a video frame determined by a seek operation performed by a user. In different application scenarios, the currently displayed target image may be implemented in different manners, which is not specifically limited herein.

Further, after the requirement information is obtained, the terminal device performs processing based on the requirement information to generate an effect material, and matches the effect material with the image content of the currently displayed target image. The effect material is media data for generating effects, and may include one or more of a picture, a sequence frame, a video, audio, or the like.

The matching of the effect material with the image content of the target image may be implemented in a plurality of manners. Taking the case where the effect material is a picture as an example, for example, the effect material matching the image content of the target image may mean that scale information of the effect material is consistent with scale information of the target image, the scale information characterizing a proportional relationship between a size of an object in the image and an actual size of the object. Alternatively, it may mean that an overall image tone (cold tone or warm tone) of the effect material is consistent with an overall tone of the target image; or it may mean that an image style (e.g., a comic style or a realistic style) of the effect material is consistent with an image style of the target image, etc.

Specifically, there are a plurality of implementations in which the terminal device performs processing based on the requirement information to generate an effect material. For example, a network resource image that matches the requirement information is searched in the network based on the requirement information, and the network resource image is processed to generate an effect material. In a possible implementation, as shown in FIG. 4, a specific implementation of step S102 includes the following steps.

Step S1021: generating a first prompt based on the requirement information, where the first prompt is configured to represent a target effect category to which the target effect belongs.

Step S1022: obtaining a data index based on the first prompt, where the data index is configured to indicate a user-generated content library corresponding to the target effect category.

Step S1023: obtaining a corresponding effect material based on the data index and the image content of the target image.

For example, first, the terminal device generates, based on the requirement information (for example, a descriptive text), a first prompt corresponding to the requirement information to represent a target effect category to which the target effect belongs, where the first prompt may be a text generated by a language model to represent semantics of the requirement information, or may be one or more keywords in the requirement information. Specifically, the first prompt includes, for example: "Background category", "Headdress category", "Makeup category", etc.

Thereafter the first prompt is inductively mapped based on a preset mapping rule, to obtain a corresponding data index, and the data index is configured to indicate the user-generated content library corresponding to the target effect category. Specifically, the data index may be an identifier that represents a specific user-generated content library, or a library address of the user-generated content library. For example, "Background category" is mapped to a corresponding UCG_01 library, and "Headdress material" is mapped to a corresponding UCG_02 library. The user-generated content library in this embodiment is a resource library for storing user-generated content (UGC). The user-generated content library may be preinstalled inside a terminal device, or stored in a server or a network (such as the Internet) outside the terminal device, which is not limited here. Then, media data that matches the image content of the target image is obtained from the corresponding user-generated content library based on the data index, thereby obtaining an effect material.

In the steps of this embodiment, the requirement information is converted into the first prompt that represents the target effect category to which the target effect belongs, and then the user-generated content is generated based on the first prompt, so that the external user-generated content is fully utilized to obtain effect materials, thereby improving the content richness of the effect materials.

Further, in a possible implementation, after step S1022, the method further includes the following step.

Step S1022A: obtaining a first rendering parameter based on the first prompt, where the first rendering parameter is configured to represent a position and/or distribution of the target effect generated based on the effect material in the target image.

For example, after the first prompt that represents the target effect category to which the target effect belongs is obtained, video materials corresponding to effects of different effect categories correspond to different rendering positions or different position distributions when the effects are added. For example, when the target effect category is "Headdress material", a target effect generated based on the effect material is positioned at an upper outline of the head of the portrait; when the target effect category is "Glasses material", a target effect generated based on the effect material is positioned at the outline of both eyes of the portrait; and when the target effect category is, for example, "Starry background effect", a target effect generated based on the effect material "Star" is evenly distributed around the outline of the portrait.

The above-mentioned information characterizing the position and/or the distribution of the target effect generated based on the effect material in the target image is the first rendering parameter. The rendering parameter may be pre-generated. After the first prompt is obtained, the first prompt is mapped to a corresponding first rendering parameter, and then in the subsequent process of generating a target effect, an effect material is rendered based on the first rendering parameter, so that the effect material appears at a correct position in the target image. That is, the target effect is generated in the target image based on the effect material and the first rendering parameter.

In this embodiment, the first rendering parameter characterizing the position and/or the distribution of the target effect generated based on the effect material in the target image is generated based on the first prompt, and in the subsequent step of generating the target effect in the target image, the effect material may be accurately rendered at the corresponding image position based on the first rendering parameter, thereby improving the visual effect of the target effect, saving the step of manually setting the position of the target effect, and improving the efficiency of configuring the effect.

Further, in a possible implementation, after the effect material is generated, the method further includes the following steps.

Step S102A: displaying at least one effect material on the first interface of the terminal device.

Step S102B: in response to a selection operation of the user, determining a target effect material.

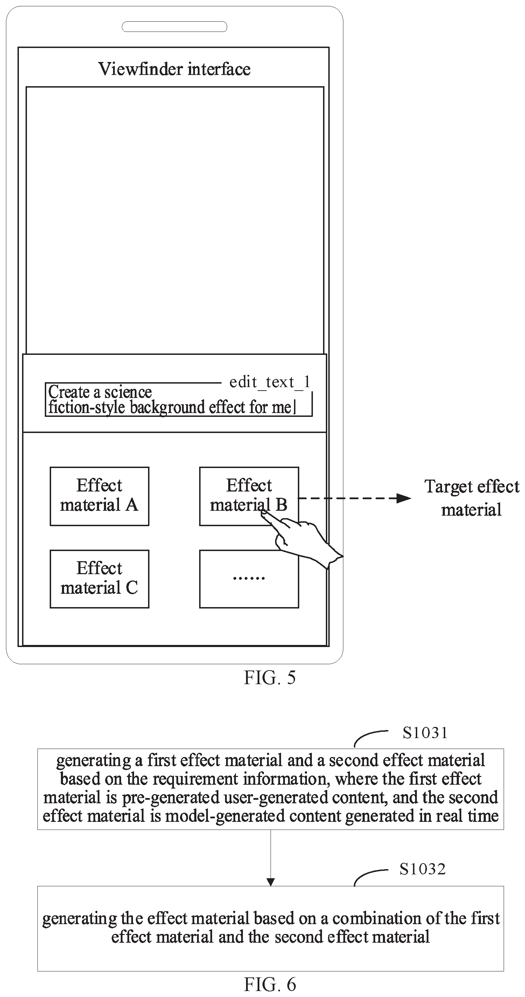

For example, FIG. 5 is a schematic diagram of a process of determining a target effect material according to an embodiment of the present disclosure. Referring to FIG. 5, after the terminal device obtains the effect material, the at least one effect material generated in the above-mentioned step is displayed in the first interface, and is shown in the figure as an effect material A, an effect material B, and an effect material C. Thereafter, the user performs a selection operation through an interaction interface, and in response to the selection operation, the terminal device determines one or more of the at least one effect material as the target effect material to participate in the subsequent steps of generating the target effect. For example, as shown in the figure, in response to the selection operation of the user, the effect material B is determined as the target effect material. In the subsequent steps, processing is performed based on the target effect material (that is, the "effect material" in the subsequent steps is the "target effect material" determined in this step) to generate the corresponding target effect.

Step S103: generating the target effect in the target image based on the effect material.

For example, after obtaining the effect material, the terminal device further performs processing based on the effect material, including, for example, processing the size or resolution of the effect material, performing cropping along the outline of the effect material, and/or cropping the target image based on the outline of the effect material, and then renders the effect material to the target image, thereby displaying the target effect in the target image, and accomplishing the process of adding the effect to the target image.

In a possible implementation, as shown in FIG. 6, a specific implementation of step S103 includes the following steps.

Step S1031: generating a first effect material and a second effect material based on the requirement information, where the first effect material is pre-generated user-generated content, and the second effect material is model-generated content generated in real time.

Step S1032: generating the effect material based on a combination of the first effect material and the second effect material.

For example, in a possible implementation, a corresponding first effect material and a corresponding second effect material are separately obtained based on the requirement information, where the first effect material is pre-generated user-generated content. For the manner of obtaining the first effect material, reference may be made to the above-mentioned specific implementation steps of step S102 shown in FIG. 4, which will not be repeated here. The second effect material is content generated by a generation model, that is, an effect material generated by the artificial intelligence generated content (AIGC) technology. Specifically, for example, a corresponding prompt may be generated from the requirement information, and then the generation model is guided based on the prompt to generate the second effect material. Other implementations for generating the second effect material will be further described in subsequent embodiments and will not be described here. Thereafter, the first effect material and the second effect material are combined by, for example, splicing, superimposing, merging, etc., to generate the effect material.

In the steps of this embodiment, the user-generated content and the model-generated content are separately obtained, and combined, the obtained effect material has both the typicality of the user-generated content and the flexibility of the model-generated content, so that the target effect finally generated based on the effect material can not only carry specific meaning and express specific existing information (using the typicality of the user-generated content), but also increase the diversity and reduce the repetition of styles (using the flexibility of the model-generated content), thereby improving the quality of the target effect generated based on the effect material.

Embodiments provide an effect generation method and apparatus, an electronic device, and a storage medium. The method includes: receiving requirement information input by a user, where the requirement information is configured to describe a generation requirement for a target effect in natural language; generating, based on the requirement information, an effect material that matches image content of a currently displayed target image; and generating the target effect in the target image based on the effect material. The generation requirement for the target effect that is input by the user is converted in real time into the effect material that matches the image content of the target image, and then the target effect is generated based on the effect material, so that a personalized effect can be generated in real time, thereby expanding the content form of the effect, matching the effect with the image content, and improving the application effects in the image.

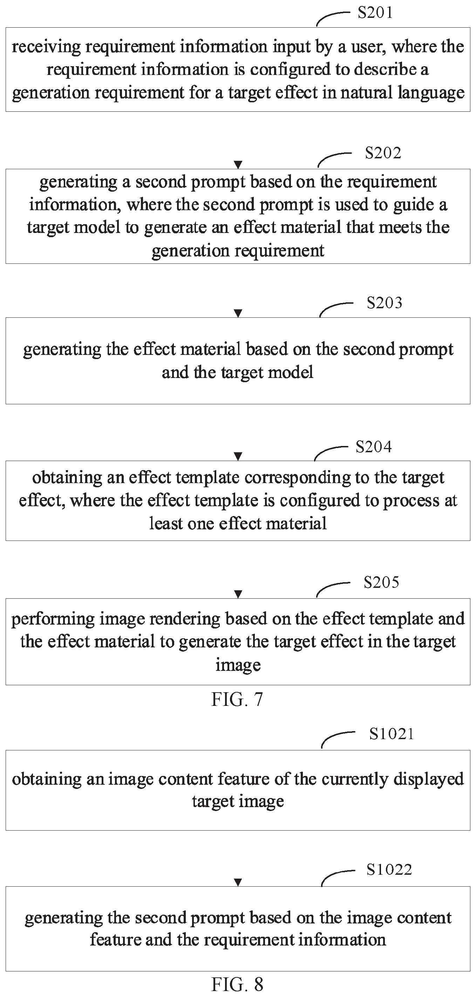

Referring to FIG. 7, FIG. 7 is a second schematic flowchart of an effect generation method according to an embodiment of the present disclosure. On the basis of the embodiment shown in FIG. 2, this embodiment further refines steps S102 and S103, where a target effect is generated by the artificial intelligence generated content (AIGC) technology. The effect generation method includes the following steps.

Step S201: receiving requirement information input by a user, where the requirement information is configured to describe a generation requirement for a target effect in natural language.

Step S202: generating a second prompt based on the requirement information, where the second prompt is configured to guide a target model to generate an effect material that meets the generation requirement.

For example, the second prompt is a prompt to be input into a generation model, and serves the purposes of clarifying tasks or requirements, limiting scopes or subjects, specifying formats or structures, determining tones or styles, specifying key information or elements, and the like, thereby guiding the target model to generate an effect material that meets the generation requirement. The target model is the above-mentioned generation model for generating a material (see related description of the second effect material). For example, as shown in FIG. 8, a specific implementation of step S202 includes the following steps.

Step S2021: obtaining an image content feature of a currently displayed target image.

Step S2022: generating the second prompt based on the image content feature and the requirement information.

For example, first, the currently displayed target image, for example, an image captured in real time that is displayed within a camera viewfinder, is processed to obtain an image content feature corresponding to the target image. The image content feature may be an identifier that represents the type of the image content, or a feature array that represents the image content, where each element in the feature array represents content (category) of the target image in one content dimension. The image content feature may alternatively be a more complex feature matrix, which will not be described in detail. Certainly, in another possible implementation, the image content feature may be a pixel matrix obtained after processing, for example, pooling (performing resolution reduction on), pixels in the target image. The specific implementation may be set as required, and will not be described in detail here.

Further, based on a collection of the image content feature and the requirement information, prompt generation is performed to generate a second prompt. The generated prompt is combined with the image content of the target image when describing the generation requirement, so as to achieve the purpose of matching the effect material generated based on the second prompt with the image content of the target image. In a possible implementation, the image content feature may be mapped into a specific parameter and inserted into the requirement information, thus obtaining second prompt information; and in another possible implementation, the image content feature and the requirement information may be combined by using a template for generating a prompt, thus generating the second prompt, which will not be described in detail.

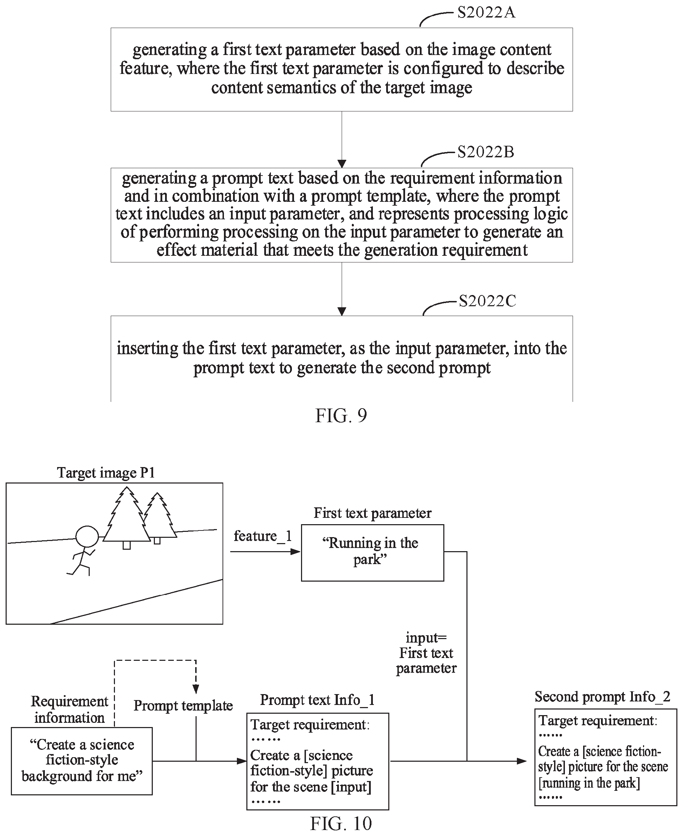

Further, as shown in FIG. 9, a specific implementation of step S2022 includes the following steps.

Step S2022A: generating a first text parameter based on the image content feature, where the first text parameter is configured to describe content semantics of the target image.

Step S2022B: generating a prompt text based on the requirement information and in combination with a prompt template, where the prompt text includes an input parameter, and the prompt text represents processing logic of performing processing on the input parameter to generate an effect material that meets the generation requirement.

Step S2022C: inserting the first text parameter, as the input parameter, into the prompt text to generate the second prompt.

Further, in a possible implementation, first, the image content feature is mapped into a first text parameter that represents and describes the content semantics of the target image. For example, the image content feature is a pixel matrix obtained through image processing of the target image, the first text parameter generated by identification and induction of the image content feature is Context_1, and a parameter value corresponding to Context_1 includes a text "Jogging in the park", which is a description of the content semantics of the target image. Thereafter, the prompt template and the requirement information are combined to generate a prompt text with an input parameter, and the first text parameter is inserted, as the input parameter, into the prompt text to generate the second prompt.

FIG. 10 is a schematic diagram of a process of generating a second prompt according to an embodiment of the present disclosure. Referring to FIG. 10, for example, first, a target image P1 is subjected to feature extraction to obtain an image content feature feature_1 (shown as feature_1 in the figure), and based on the image content feature feature_1, a first text parameter "Running in the park" is obtained. Thereafter, the content of the requirement information input by the user includes "Create a science fiction-style background for me". Based on the requirement information and the prompt template, a prompt text Info_1 with an input parameter is generated, the content of which, as shown in the figure, includes, for example: "Create a [science fiction-style] picture for the scene [input]". The keyword "science fiction-style" in the above-mentioned content is generated by using the prompt template based on the requirement information, while the keyword "input" can be considered a reserved parameter. The prompt text Info_1 represents processing logic of performing processing on the input parameter "input" to generate an effect material that meets the generation requirement. Thereafter, the first text parameter is inserted, as the input parameter "input", into the prompt text (shown as input=first text parameter in the figure), and the content of the obtained second prompt Info_2 includes "Create a [science fiction-style] picture for the scene [running in the park]". Optionally, the prompt template may be determined based on the requirement information.

Step S203: generating the effect material based on the second prompt and the target model.

For example, thereafter, based on the generated second prompt and the corresponding target model, the target model can be guided to generate corresponding content, namely, an effect material. In the steps of this embodiment, the second prompt is generated by combining the image content feature, and the target model is guided to output the effect material based on the second prompt. Since the image content feature of the target image is incorporated into the second prompt, the effect material generated based on the second prompt can be matched with the image content of the target image, thereby improving a matching degree between the target effect and the target image on the basis of generating a personalized target effect, and improving the application effects of the effect in the image.

Step S204: obtaining an effect template corresponding to the target effect, where the effect template is configured to process at least one effect material.

Step S205: performing image rendering based on the effect template and the effect material to generate the target effect in the target image.

For example, after the effect material is obtained, the effect material is further processed using the effect template to obtain effect rendering data that matches the target image, thereby implementing generation and display of the target effect. Specifically, for example, the target effect category of the target effect is determined by using the requirement information, and the target effect category includes, for example, "Background effect", "Headdress effect", "Makeup effect", etc. The specific implementation may be based on the first prompt. For the specific implementation of determining the target effect category based on the first prompt, reference may be made to the related description of the embodiment shown in FIG. 4. Certainly, in other implementations, the requirement information may alternatively be directly mapped to a corresponding effect template. This may be set as required, and will not be described in detail here. Thereafter, a corresponding effect template is obtained based on the target effect category, and the effect material is processed by using the effect template, including using size conversion, cropping, etc. For example, when the target effect category corresponding to the effect template is "Background effect", the effect material is cropped so as not to overlap with the object in the target image, and corresponding effect rendering data is generated. The effect rendering data is rendered to generate the target effect in the target image.

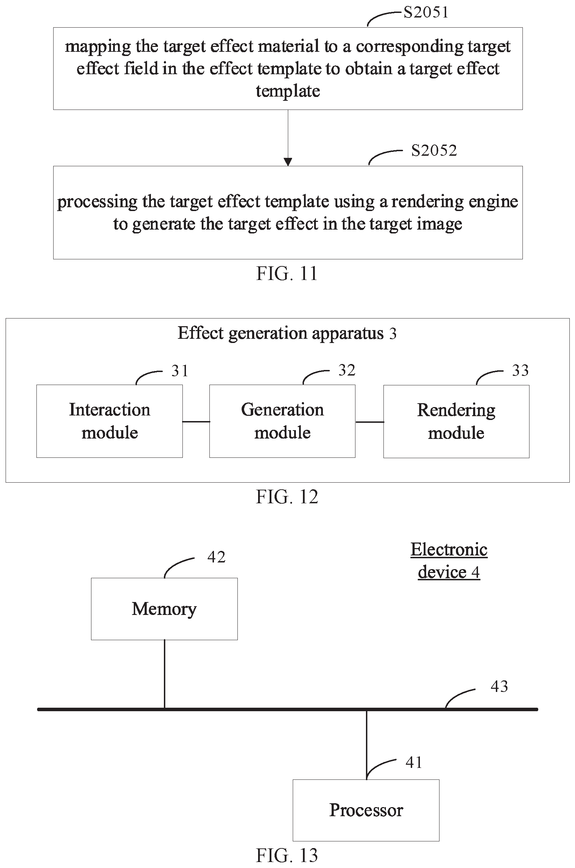

Further, for example, the effect template includes at least one effect field, where the effect field is configured to add at least one effect element to the target image. As shown in FIG. 11, a specific implementation of step S205 includes the following steps.

Step S2051: mapping the target effect material to a corresponding target effect field in the effect template to obtain a target effect template.

Step S2052: processing the target effect template using a rendering engine to generate the target effect in the target image.

For example, the effect field in the effect template is configured to add at least one effect element to the target image. For example, the effect template includes a #1 field, a #2 field, and a #3 field, where the #1 field corresponds to the "Headdress effect", and is configured to add a virtual Headdress (an effect element, similarly hereinafter) to a person in the target image; the #2 field corresponds to the "Makeup effect", and is configured to add a makeup effect to the face of the person in the target image; and the #3 field corresponds to the "Background effect", and is configured to add a virtual background to the person in the target image. The target effect material is mapped to a corresponding target effect field in the effect template. For example, the first effect material generated based on the user-generated content in the above-mentioned steps is mapped to the #1 field; and two (two sets of) second effect materials generated by using the model in the above-mentioned steps are mapped to the #2 and #3 fields. In this way, the "Headdress effect", the "Makeup effect", and the "Background effect" can be added to the target image simultaneously. Thereafter, the configured target effect template is processed using the rendering engine, thereby achieving the purpose of generating a target effect in a target image. The specific implementation principle of image rendering is conventional art and will not be described in detail here.

The above-mentioned effect template may be manually configured by a user or automatically generated based on the requirement information, The specific implementation can be implemented by a pre-trained model, which will not be described in detail here.

In the steps of this embodiment, the effect template may be configured to achieve an effect that a plurality of effect elements are added at one time. Moreover, the effect materials corresponding to the effect elements are obtained independently in the previous steps, and therefore have a better matching degree with the image content and have diversity. In addition, different types of effect materials (a first effect material and a second effect material) are mapped to the effect template, so that the user's personalized configuration requirement can be met.

Further, the effect field corresponds to at least one parameter field, where the parameter field is configured to represent a rule of processing an effect material corresponding to the effect field to generate a corresponding effect element. Taking the #1 field in the above-mentioned example as an example, for example, the #1 field corresponds to three parameter fields, namely, a parameter field a, a parameter field b, and a parameter field c, where the parameter field a represents the position of the "Headdress effect" in the image, more specifically, for example, a distance from the outline of the person's head in the target image; the parameter field b represents the color of the "Headdress effect"; and the parameter field c represents the transparency of the "Headdress effect".

In this embodiment, one or more parameter fields corresponding to the effect fields are further configured in the effect template, so that refined control of the visual effect of the target effect is achieved, thereby further enhancing the visual performance effects and the diversity of the target effect, increasing the generation efficiency of the target effect, and improving the application effects in the image.

In this embodiment, an implementation of step S201 is the same as that of step S101 in the embodiment shown in FIG. 2 in the present disclosure, and details are not described herein again.

Corresponding to the effect generation method in the above-described embodiments, FIG. 12 is a structural block diagram of an effect generation apparatus according to an embodiment of the present disclosure. For ease of illustration, only parts related to this embodiment of the present disclosure are shown. Referring to FIG. 12, an effect generation apparatus 3 includes:
an interaction module 31 configured to receive requirement information input by a user, where the requirement information is configured to describe a generation requirement for a target effect in natural language;
a generation module 32 configured to generate, based on the requirement information, an effect material that matches image content of a currently displayed target image; and
a rendering module 33 configured to generate the target effect in the target image based on the effect material.

In an embodiment of the present disclosure, the interaction module 31 is further configured to: display at least one effect material in a first interface; and display, in response to a selection operation for a target effect material in the at least one effect material, a target effect corresponding to the target effect material in the target image.

In an embodiment of the present disclosure, the generation module 32 is specifically configured to: generate a first prompt based on the requirement information, where the first prompt is configured to represent a target effect category to which the target effect belongs; obtain a data index based on the first prompt, where the data index is configured to indicate a user-generated content library corresponding to the target effect category; and obtain a corresponding effect material based on the data index and the image content of the target image.

In an embodiment of the present disclosure, the generation module 32 is further configured to: obtain a first rendering parameter based on the first prompt, where the first rendering parameter is configured to represent a position and/or distribution of the target effect generated based on the effect material in the target image. The rendering module 33 is specifically configured to: generate the target effect in the target image based on the effect material and the first rendering parameter.

In an embodiment of the present disclosure, the generation module 32 is specifically configured to: generate a second prompt based on the requirement information, where the second prompt is configured to guide a target model to generate an effect material that meets the generation requirement; and generate the effect material based on the second prompt and the target model.

In an embodiment of the present disclosure, when generating the second prompt based on the requirement information, the generation module 32 is specifically configured to: obtain an image content feature of the currently displayed target image; and generate the second prompt based on the image content feature and the requirement information.

In an embodiment of the present disclosure, when generating the second prompt based on the image content feature and the requirement information, the generation module 32 is specifically configured to: generate a first text parameter based on the image content feature, where the first text parameter is configured to describe content semantics of the target image; generate a prompt text based on the requirement information and in combination with a prompt template, where the prompt text includes an input parameter, and the prompt text represents processing logic of performing processing on the input parameter to generate an effect material that meets the generation requirement; and insert the first text parameter, as the input parameter, into the prompt text to generate the second prompt.

In an embodiment of the present disclosure, the generation module 32 is specifically configured to: generate a first effect material and a second effect material based on the requirement information, where the first effect material is pre-generated user-generated content, and the second effect material is model-generated content generated in real time; and generate the effect material based on a combination of the first effect material and the second effect material.

In an embodiment of the present disclosure, the rendering module 33 is specifically configured to: obtain an effect template corresponding to the target effect, where the effect template is configured to process at least one effect material; and perform image rendering based on the effect template and the effect material to generate the target effect in the target image.

In an embodiment of the present disclosure, the effect template includes at least one effect field, where the effect field is configured to add at least one effect element to the target image. When performing image rendering based on the effect template and the effect material to generate the target effect in the target image, the rendering module 33 is specifically configured to: map the target effect material to a corresponding target effect field in the effect template to obtain a target effect template; and process the target effect template using a rendering engine to generate the target effect in the target image.

In an embodiment of the present disclosure, the effect field corresponds to at least one parameter field, where the parameter field is configured to represent a rule of processing an effect material corresponding to the effect field to generate a corresponding effect element.

The interaction module 31, the generation module 32, and the rendering module 33 are connected in sequence. The effect generation apparatus 3 provided in this embodiment may perform the technical solution of the above-described method embodiment. The implementation principles and technical effects thereof are similar, which are not repeated in this embodiment.

FIG. 13 is a schematic structural diagram of an electronic device according to an embodiment of the present disclosure. As shown in FIG. 13, an electronic device 4 includes:
a processor 41 and a memory 42 communicatively connected to the processor 41.

The memory 42 has computer-executable instructions stored thereon.

The processor 41 executes the computer-executable instructions stored in the memory 42 to implement the effect generation method according to the embodiments as shown in FIG. 2 to FIG. 11.

Optionally, the processor 41 is connected to the memory 42 through a bus 43.

The related illustration may be understood with reference to related descriptions and effects that correspond to the steps in the embodiments corresponding to FIG. 2 to FIG. 11. Details are not repeated herein.

An embodiment of the present disclosure provides a computer-readable storage medium. The computer-readable storage medium stores computer-executable instructions that, when executed by a processor, are configured to implement the effect generation method according to any one of the embodiments corresponding to FIG. 2 to FIG. 11 of the present disclosure.

In order to implement the above-mentioned embodiments, an embodiment of the present disclosure further provides an electronic device.

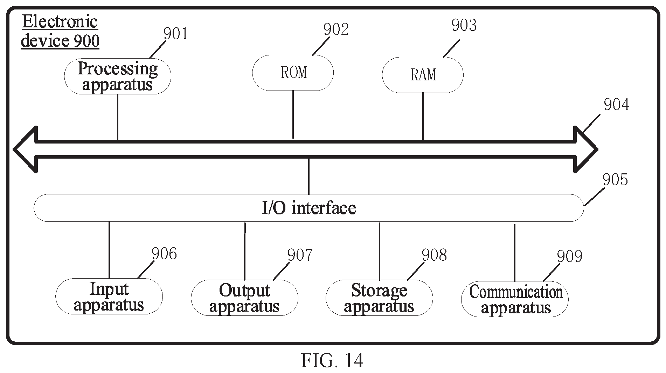

FIG. 14 is a schematic structural diagram of an electronic device 900 suitable for implementing the embodiments of the present disclosure. The electronic device 900 may be a terminal device or a server. The terminal device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and a fixed terminal such as a digital TV and a desktop computer. The electronic device shown in FIG. 14 is merely an example, and shall not impose any limitation on the function and scope of use of the embodiments of the present disclosure.

As shown in FIG. 14, the electronic device 900 may include a processing apparatus (for example, a central processing unit or a graphics processing unit) 901 that may perform a variety of appropriate actions and processing based on a program stored in a read-only memory (ROM) 902 or a program loaded from a storage apparatus 908 into a random-access memory (RAM) 903. The RAM 903 further stores various programs and data required for the operation of the electronic device 900. The processing apparatus 901, the ROM 902, and the RAM 903 are connected to one another through a bus 904. An input/output (I/O) interface 905 is also connected to the bus 904.

Generally, the following apparatus may be connected to the I/O interface 905: an input apparatus 906 including, for example, a touchscreen, a touchpad, a keyboard, a mouse, a camera, a microphone, an accelerometer, and a gyroscope; an output apparatus 907 including, for example, a liquid crystal display (LCD), a speaker, and a vibrator; the storage apparatus 908 including, for example, a magnetic tape and a hard disk drive; and a communication apparatus 909. The communication apparatus 909 may allow the electronic device 900 to perform wireless or wired communication with other devices to exchange data. Although FIG. 14 shows the electronic device 900 having various apparatuses, it should be understood that it is not required to implement or have all of the shown apparatus. It may be an alternative to implement or have more or fewer apparatuses.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 909, installed from the storage apparatus 908, or installed from the ROM 902. When the computer program is executed by the processing apparatus 901, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random-access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to perform the method shown in the above-mentioned embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

In a first aspect, according to one or more embodiments of the present disclosure, an effect generation method is provided. The method includes:
receiving requirement information input by a user, where the requirement information is configured to describe a generation requirement for a target effect in natural language; generating, based on the requirement information, an effect material that matches image content of a currently displayed target image; and generating the target effect in the target image based on the effect material.

According to one or more embodiments of the present disclosure, the method further includes: displaying at least one effect material on a first interface; and displaying, in response to a selection operation for a target effect material in the at least one effect material, a target effect corresponding to the target effect material in the target image.

According to one or more embodiments of the present disclosure, generating, based on the requirement information, the effect material that matches the image content of the currently displayed target image includes: generating a first prompt based on the requirement information, where the first prompt is configured to represent a target effect category to which the target effect belongs; obtaining a data index based on the first prompt, where the data index is configured to indicate a user-generated content library corresponding to the target effect category; and obtaining a corresponding effect material based on the data index and the image content of the target image.

According to one or more embodiments of the present disclosure, the method further includes: obtaining a first rendering parameter based on the first prompt, where the first rendering parameter is configured to represent a position and/or distribution of the target effect generated based on the effect material in the target image; and generating the target effect in the target image based on the effect material includes: generating the target effect in the target image based on the effect material and the first rendering parameter.

According to one or more embodiments of the present disclosure, generating, based on the requirement information, the effect material that matches the image content of the currently displayed target image includes: generating a second prompt based on the requirement information, where the second prompt is configured to guide a target model to generate an effect material that meets the generation requirement; and generating the effect material based on the second prompt and the target model.

According to one or more embodiments of the present disclosure, generating the second prompt based on the requirement information includes: obtaining an image content feature of the currently displayed target image; and generating the second prompt based on the image content feature and the requirement information.

According to one or more embodiments of the present disclosure, generating the second prompt based on the image content feature and the requirement information includes: generating a first text parameter based on the image content feature, where the first text parameter is configured to describe content semantics of the target image; generating a prompt text based on the requirement information and in combination with a prompt template, where the prompt text includes an input parameter, and represents processing logic of performing processing on the input parameter to generate an effect material that meets the generation requirement; and inserting the first text parameter, as the input parameter, into the prompt text to generate the second prompt.

According to one or more embodiments of the present disclosure, generating, based on the requirement information, the effect material that matches the image content of the currently displayed target image includes: generating a first effect material and a second effect material based on the requirement information, where the first effect material is pre-generated user-generated content, and the second effect material is model-generated content generated in real time; and generating the effect material based on a combination of the first effect material and the second effect material.

According to one or more embodiments of the present disclosure, generating the target effect in the target image based on the effect material includes: obtaining an effect template corresponding to the target effect, where the effect template is configured to process at least one effect material; and performing image rendering based on the effect template and the effect material to generate the target effect in the target image.

According to one or more embodiments of the present disclosure, the effect template includes at least one effect field, where the effect field is configured to add at least one effect element to the target image; and performing image rendering based on the effect template and the effect material to generate the target effect in the target image includes: mapping the target effect material to a corresponding target effect field in the effect template to obtain a target effect template; and processing the target effect template using a rendering engine to generate the target effect in the target image.

According to one or more embodiments of the present disclosure, the effect field corresponds to at least one parameter field, where the parameter field is configured to represent a rule of processing an effect material corresponding to the effect field to generate a corresponding effect element.

In a second aspect, according to one or more embodiments of the present disclosure, an effect generation apparatus is provided. The apparatus includes:
an interaction module configured to receive requirement information input by a user, where the requirement information is configured to describe a generation requirement for a target effect in natural language;
a generation module configured to generate, based on the requirement information, an effect material that matches image content of a currently displayed target image; and
a rendering module configured to generate the target effect in the target image based on the effect material.

According to one or more embodiments of the present disclosure, the interaction module is further configured to: display at least one effect material in a first interface; and display, in response to a selection operation for a target effect material in the at least one effect material, a target effect corresponding to the target effect material in the target image.

According to one or more embodiments of the present disclosure, the generation module is specifically configured to: generate a first prompt based on the requirement information, where the first prompt is configured to represent a target effect category into which the target effect falls; obtain a data index based on the first prompt, where the data index is configured to indicate a user-generated content library corresponding to the target effect category; and obtain a corresponding effect material based on the data index and the image content of the target image.

According to one or more embodiments of the present disclosure, the generation module is further configured to: obtain a first rendering parameter based on the first prompt, where the first rendering parameter is configured to represent a position and/or distribution of the target effect generated based on the effect material in the target image. The rendering module is specifically configured to: generate the target effect in the target image based on the effect material and the first rendering parameter.

According to one or more embodiments of the present disclosure, the generation module is specifically configured to: generate a second prompt based on the requirement information, where the second prompt is configured to guide a target model to generate an effect material that meets the generation requirement; and generate the effect material based on the second prompt and the target model.

According to one or more embodiments of the present disclosure, when generating the second prompt based on the requirement information, the generation module is specifically configured to: obtain an image content feature of the currently displayed target image; and generate the second prompt based on the image content feature and the requirement information.

According to one or more embodiments of the present disclosure, when generating the second prompt based on the image content feature and the requirement information the generation module is specifically configured to: generate a first text parameter based on the image content feature, where the first text parameter is configured to describe content semantics of the target image; generate a prompt text based on the requirement information and in combination with a prompt template, where the prompt text includes an input parameter, and represents processing logic of performing processing on the input parameter to generate an effect material that meets the generation requirement; and insert the first text parameter, as the input parameter, into the prompt text to generate the second prompt.

According to one or more embodiments of the present disclosure, the generation module is specifically configured to: generate a first effect material and a second effect material based on the requirement information, where the first effect material is pre-generated user-generated content, and the second effect material is model-generated content generated in real time; and generate the effect material based on a combination of the first effect material and the second effect material.

According to one or more embodiments of the present disclosure, the rendering module is specifically configured to: obtain an effect template corresponding to the target effect, where the effect template is configured to process at least one effect material; and perform image rendering based on the effect template and the effect material to generate the target effect in the target image.

According to one or more embodiments of the present disclosure, the effect template includes at least one effect field, where the effect field is configured to add at least one effect element to the target image; and when performing image rendering based on the effect template and the effect material to generate the target effect in the target image, the rendering module is specifically configured to: map the target effect material to a corresponding target effect field in the effect template to obtain a target effect template; and process the target effect template using a rendering engine to generate the target effect in the target image.

According to one or more embodiments of the present disclosure, the effect field corresponds to at least one parameter field, where the parameter field is configured to represent a rule of processing an effect material corresponding to the effect field to generate a corresponding effect element.

In a third aspect, according to one or more embodiments of the present disclosure, an electronic device is provided, including: at least one processor and a memory.

The memory has computer-executable instructions stored thereon.

The at least one processor executes the computer-executable instructions stored in the memory, to cause the at least one processor to perform the effect generation method according to the first aspect and various possible designs of the first aspect.

In a fourth aspect, according to one or more embodiments of the present disclosure, a computer-readable storage medium is provided. The computer-readable storage medium stores computer-executable instructions that, when executed by a processor, cause the effect generation method according to the first aspect and various possible designs of the first aspect to be implemented.

In a fifth aspect, according to one or more embodiments of the present disclosure, a computer program product including a computer program is provided. When the computer program is executed by a processor, the effect generation method according to the first aspect and various possible designs of the first aspect is implemented.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. An effect generation method, comprising:
receiving requirement information input by a user, wherein the requirement information is configured to describe a generation requirement for a target effect in natural language;
generating, based on the requirement information, an effect material that matches image content of a currently displayed target image; and
generating the target effect in the target image based on the effect material.

2. The method according to claim 1, further comprising:
displaying at least one effect material on a first interface; and
displaying, in response to a selection operation for a target effect material in the at least one effect material,
a target effect corresponding to the target effect material in the target image.

3. The method according to claim 1, wherein generating, based on the requirement information, the effect material that matches the image content of the currently displayed target image comprises:
generating a first prompt based on the requirement information, wherein the first prompt is configured to represent a target effect category to which the target effect belongs;
obtaining a data index based on the first prompt, wherein the data index is configured to indicate a user-generated content library corresponding to the target effect category; and
obtaining a corresponding effect material based on the data index and the image content of the target image.

4. The method according to claim 3, further comprising:
obtaining a first rendering parameter based on the first prompt, wherein the first rendering parameter is configured to represent a position and/or distribution of the target effect generated based on the effect material in the target image; and
generating the target effect in the target image based on the effect material comprises:
generating the target effect in the target image based on the effect material and the first rendering parameter.

5. The method according to claim 1, wherein generating, based on the requirement information, the effect material that matches the image content of the currently displayed target image comprises:
generating a second prompt based on the requirement information, wherein the second prompt is configured to guide a target model to generate an effect material that meets the generation requirement; and
generating the effect material based on the second prompt and the target model.

6. The method according to claim 5, wherein generating the second prompt based on the requirement information comprises:
obtaining an image content feature of the currently displayed target image; and
generating the second prompt based on the image content feature and the requirement information.

7. The method according to claim 6, wherein generating the second prompt based on the image content feature and the requirement information comprises:
generating a first text parameter based on the image content feature, wherein the first text parameter is configured to describe content semantics of the target image;
generating a prompt text based on the requirement information and in combination with a prompt template, wherein the prompt text comprises an input parameter, and the prompt text represents processing logic of performing processing on the input parameter to generate an effect material that meets the generation requirement; and
inserting the first text parameter, as the input parameter, into the prompt text to generate the second prompt.

8. The method according to claim 1, wherein generating, based on the requirement information, the effect material that matches the image content of the currently displayed target image comprises:
generating a first effect material and a second effect material based on the requirement information, wherein the first effect material is pre-generated user-generated content, and the second effect material is model-generated content generated in real time; and
generating the effect material based on a combination of the first effect material and the second effect material.

9. The method according to any one of claims 1 to 8, wherein generating the target effect in the target image based on the effect material comprises:
obtaining an effect template corresponding to the target effect, wherein the effect template is configured to process at least one effect material; and
performing image rendering based on the effect template and the effect material to generate the target effect in the target image.

10. The method according to claim 9, wherein the effect template comprises at least one effect field, wherein the effect field is configured to add at least one effect element to the target image; and
performing image rendering based on the effect template and the effect material to generate the target effect in the target image comprises:
mapping the target effect material to a corresponding target effect field in the effect template to obtain a target effect template; and
processing the target effect template using a rendering engine to generate the target effect in the target image.

11. The method according to claim 10, wherein the effect field corresponds to at least one parameter field, wherein the parameter field is configured to represent a rule of processing an effect material corresponding to the effect field to generate a corresponding effect element.

12. An effect generation apparatus, comprising:
an interaction module configured to receive requirement information input by a user, wherein the requirement information is configured to describe a generation requirement for a target effect in natural language;
a generation module configured to generate, based on the requirement information, an effect material that matches image content of a currently displayed target image; and
a rendering module configured to generate the target effect in the target image based on the effect material.

13. An electronic device, comprising: a processor and a memory, wherein
the memory has computer-executable instructions stored thereon; and
the processor executes the computer-executable instructions stored in the memory, to cause the processor to perform the effect generation method according to any one of claims 1 to 11.

14. A computer-readable storage medium having computer-executable instructions stored therein that, when executed by a processor, cause the effect generation method according to any one of claims 1 to 11 to be implemented.

15. A computer program product, comprising a computer program that, when executed by a processor, causes the effect generation method according to any one of claims 1 to 11 to be implemented.
